# EUROPEAN PATENT APPLICATION

(11) **EP 3 579 610 A1**
(43) Date of publication of application: **11.12.2019**
(21) Application number: 17895307.1
(22) Date of filing: 03.02.2017
(51) Int. Cl.: H04W 28/04, H04W 88/18

(54) **WIRELESS COMMUNICATION SYSTEM, BASE STATION DEVICE, TERMINAL DEVICE AND WIRELESS COMMUNICATION METHOD**

(71) Applicant: Fujitsu Limited, Kawasaki-shi, Kanagawa 211-8588 (JP)
(72) Inventor: SHIMOMURA, Tsuyoshi, Kawasaki-shi Kanagawa 211-8588 (JP)
(74) Representative: Haseltine Lake Kempner LLP
(86) International application number: PCT/JP2017/004128
(87) International publication number: WO 2018/142601

(57) **Abstract**

A base station device (1) includes a scheduler (13) that decides on transmission data which is to be transmitted to the terminal device, selects either a first feedback method or a second feedback method as the feedback method based on the configuration of the transmission data, receives, from the terminal device, feedback information with respect to the transmission data that is transmitted, and decides on retransmission data according to the feedback method selected based on the feedback information; and includes a downlink signal baseband processing unit (14) that transmits the transmission data and the retransmission data to a terminal device. The terminal device includes a PDSCH reception processing unit and an ACK/NACK generating unit that determine whether or not the decoding of the transmission data, which is transmitted from the base station device (1), is successful and, if the decoding of the transmission data is not successful, generate feedback information according to the feedback method decided by the scheduler (13); and includes an uplink signal baseband processing unit (15) that transmits the feedback information to the base station device (1).

## Description

### [Technical Field]

The present invention is related to a wireless communication system, a base station device, a terminal device, and a wireless communication method.

### [Background Art]

In present-day networks, the traffic among mobile devices (smartphones and feature phones) accounts for the majority of the resources of the networks. Moreover, the traffic attributed to the mobile devices continues to be on a rising trend.

On the other hand, in tune with the expansion of IoT (Internet of a Things) services (for example, monitoring systems such as transportation systems and smart meters), there is a demand to cater to services having varied requirements. For that reason, in the 5G (Generation) (5th generation mobile telecommunications) communication standard, in addition to incorporating the 4G (4th generation mobile telecommunications) technology, there is a demand for a technology enabling achieving higher data rate, achieving further capacity enlargement, achieving lower latency, and achieving larger amounts of connections. Meanwhile, the 5G technology is sometimes called NR technology (New Radio access technology).

As described above, in order to cater to varied services, in the 5G technology, the support is simulated for a large number of use cases classified into eMBB (Enhanced Mobile Brad Band), Massive MTC (Machine Type Communications), and URLLC (Ultra-Reliable and Low Latency Communication).

Meanwhile, in the 5G technology, it is required that the ultra-reliable and low latency communication data (URLLC data) and the other data (such as the eMBB data) are simultaneously supported in the same carrier.

In the LTE (Long Term Evolution) representing the 4th generation communication method, in order to achieve efficient data transmission, the hybrid automatic repeat request (HARQ) technology is implemented. In the HARQ technology, regarding the data that could not be correctly decoded in the processing of the layer-1 protocol hierarchy such as the LTE, the receiving device requests the transmission device to transmit the data again. Upon receiving the request for retransmission of the data, the transmission device transmits, as retransmission data, the data related to the original data that could not be correctly decoded by the receiving device. The receiving device performs data decoding by combining the data that could not be correctly decoded and the retransmission data received in response to the retransmission request regarding the data that could not be correctly decoded. That enables achieving retransmission control with high efficiency and high accuracy.

At present, in the 3GPP (3rd Generation Partnership Project), for example, a technology is proposed that is related to the HARQ feedback corresponding to the next-generation communication methods (Non Patent Literature 3, Non Patent Literature 4, and Non Patent Literature 5).

### [Citation List]

### [Non Patent Literature]

Non Patent Literature 1: "Revision of SI: Study on New Radio Access Technology", NTT docomo, RP-161596, 3GPP TSG RAN Meeting #73, New Orleans, 19-22. Septemper, 2016
Non Patent Literature 2: 3GPP TR 38.913 V14.0.0 (2016-10)
Non Patent Literature 3: "Discussion on partial retransmission for eMBB", Samsung, R1-1700959, 3GPP TSG RAN Metting NR#1 Spokane, 16-20 January, 2017
Non Patent Literature 4: "DL Scheduling and UL control information for URLLC", Fujitsu, R1-1700658, 3GPP TSG RAN WG1 NR Ad-Hoc Metting, Spokane, 16-20 January, 2017
Non Patent Literature 5: "Enriched feedback for adaptive HARQ", Nokia, Alcatel-Lucent Shanghai Bell, R1-1701020, 3GPP TSG RAN WG1 NR Ad-Hoc Metting, Spokane, 16-20 January, 2017

### [Summary]

### [Technical Problem]

Meanwhile, in the next-generation communication methods (for example, the 5th generation communication method), it is required as described above that a plurality of use cases is supported. Hence, it is believed that the requirement is for catering to a plurality of use cases and for processing the HARQ feedback in an efficient manner.

The technology disclosed herein is developed in view of the issues mentioned above, and it is an object to provide a wireless communication system, a base station device, a terminal device, and a wireless communication method that enable processing the HARQ feedback in an efficient manner.

### [Solution to Problem]

According to an aspect of an embodiment, a wireless communication system includes: a base station device and a terminal device, wherein the base station device includes a communication control unit that decides on transmission data which is to be transmitted to the terminal device, selects, as a feedback method, either a first feedback method or a second feedback method based on configuration of the transmission data, receives, from the terminal device, feedback information with respect to the transmission data that is transmitted, and decides on retransmission data according to the feedback method selected based on the feedback information, and a data transmitting unit that transmits the transmission data and the retransmission data decided by the communication control unit, and the terminal device includes a generating unit that determines whether or not decoding of the transmission data, which is transmitted from the base station device, is successful, and generates the feedback information according to the feedback method decided by the communication control unit, and a feedback information transmitting unit that transmits the feedback information, which is generated by the generating unit, to the base station device.

### [Advantageous Effects of Invention]

It is possible to process the HARQ feedback in an efficient manner.

### [Brief Description of Drawings]

FIG. 1 is a block diagram of a base station device.
FIG. 2 is a block diagram of a terminal device.
FIG. 3 is a diagram for explaining an exemplary flow of operations performed in the case of transmission of data from the base station device to the terminal device.
FIG. 4 is a diagram for explaining about a CBG type feedback method.
FIG. 5 is a diagram illustrating an example of a signal failure level determination table.
FIG. 6 is a diagram illustrating the correspondence between the fed-back bit count and the feedback method in the case in which the ACK/NACK bit count is two in each transport block.
FIG. 7 is a diagram illustrating an example of an operation definition table referred to in the case in which a signal having the ACK/NACK bit count of two in each transport block is used.
FIG. 8 is a diagram illustrating an example of an operation definition table referred to in the case in which a signal having the ACK/NACK bit count of three in each transport block is used.
FIG. 9 is a diagram illustrating an example of the physical transmission format of PUCCH meant for transmitting ACK/NACK.
FIG. 10 is a flowchart for explaining the operations for initial transmission of data as performed by the base station device according to a first embodiment.
FIG. 11 is a flowchart for explaining a reception operation performed by the terminal device at the time of initial transmission of data according to the first embodiment.
FIG. 12 is a flowchart for explaining a retransmission operation performed by the base station device according to the first embodiment.
FIG. 13 is a flowchart for explaining the reception operation performed by the terminal device at the time of data retransmission according to the first embodiment.
FIG. 14 is a diagram illustrating PDCCH in the case in which different wireless resources are set for use for each HARQ feedback method.
FIG. 15 is a flowchart for explaining the reception operation performed by the terminal device at the time of initial transmission of data according to a second embodiment.
FIG. 16 is a diagram illustrating the state in which the transmission timing of the signal indicating ACK/NACK of a multilevel type feedback method overlaps with the transmission timing of the signal indicating ACK/NACK of the CBG type feedback method.
FIG. 17 is a hardware configuration diagram of the base station device according to the embodiments.
FIG. 18 is a hardware configuration diagram of the terminal device according to the embodiments.

### Description of Embodiments

Exemplary embodiments of a wireless communication system, a base station device, a terminal device, and a wireless communication method are described below in detail with reference to the accompanying drawings. However, the technology disclosed herein is not limited by the embodiments described below.

### [First embodiment]

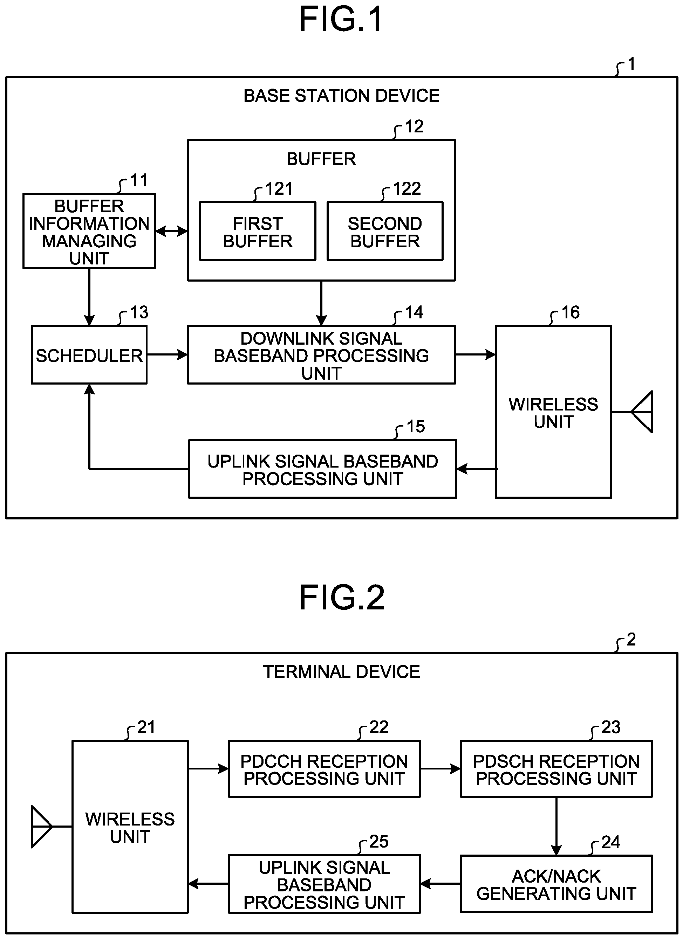

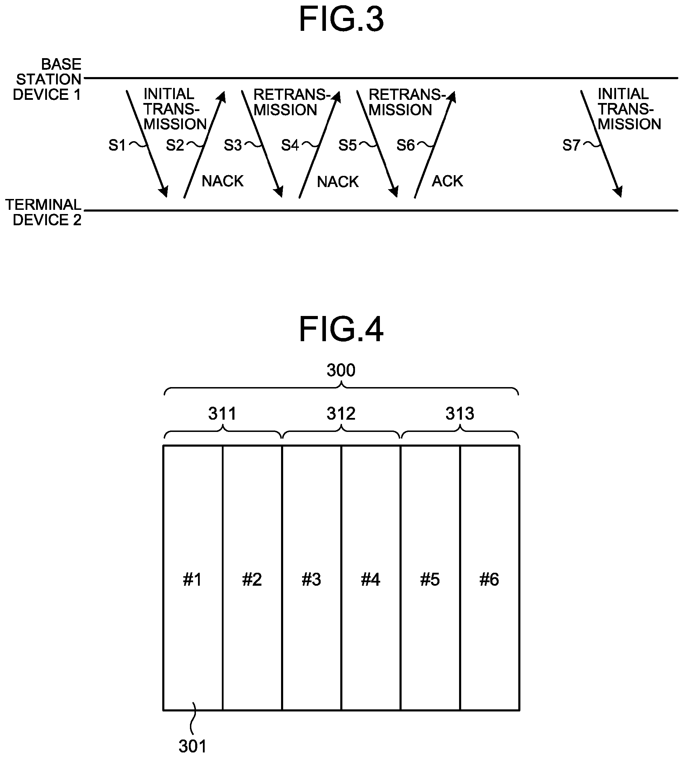

FIG. 1 is a block diagram of a base station device. FIG. 2 is a block diagram of a terminal device. A base station device 1 and a terminal device 2 transmit and receive data using wireless communication. FIG. 3 is a diagram for explaining an exemplary flow of operations performed in the case of transmission of data from the base station device to the terminal device.

As illustrated in FIG. 3, at the time of data transmission, the base station device 1 transmits data to the terminal device 2 (Step S1). Herein, the data transmission performed for the first time is sometimes called "initial transmission". The base station device 1 transmits data after performing channel encoding. In the terminal device 2, when it is determined that the received data is correctly decoded, the data reception is considered to be successful. Upon receiving data from the base station device 1, if the data is not accurately received, then the terminal device 2 issues a NACK (Negative ACKnowledgement), which is a HARQ-based retransmission request, to the base station device 1 (Step S2). Upon receiving the NACK from the terminal device 2, the base station device 1 retransmits the data (Step S3). Herein, in accordance with the transmission information obtained from the terminal device 2, the base station device 1 transmits some or all of the encoded data. Then, the terminal device 2 receives the retransmitted data from the base station device 1. Subsequently, the terminal device 2 decodes the initially-transmitted data using the retransmitted data. If the initially-transmitted data could not be correctly decoded, then the terminal device 2 again sends a NACK to the base station device 1 (Step S4). Upon again receiving the NACK from the terminal device 2, the base station device 1 retransmits the data (Step S5). The terminal device 2 again receives the retransmitted data from the base station device 1. Then, the terminal device 2 decodes the initially-transmitted data using the retransmitted data. If the initially-transmitted data could be correctly decoded, then the terminal device 2 sends an ACK, which represents a HARQ-based reception success notification, to the base station device 1 (Step S6). Upon receiving the ACK, the base station device 1 ends the data transmission. Then, the base station device 1 starts the initial transmission of some other data (Step S7) .

In this way, until the data transmitted from the base station device 1 is correctly received, HARQ-based data retransmission is performed in a repeated manner, so that the reliability of communication is secured between the base station device 1 and the terminal device 2. Given below is the detailed explanation of the base station device 1 and the terminal device 2.

As illustrated in FIG. 1, the base station device 1 includes a buffer information managing unit 11, a buffer 12, a scheduler 13, a downlink signal baseband processing unit 14, an uplink signal baseband processing unit 15, and a wireless unit 16.

The buffer 12 is a memory area meant for temporarily storing the transmission data obtained by the base station device 1. The buffer 12 includes a plurality of buffers depending on the type of data. In the following explanation, it is assumed that the buffer 12 includes a first buffer 121 and a second buffer 122.

The buffer information managing unit 11 receives, from a higher-level device, input of data to be transmitted to the terminal device 2 (not illustrated). Then, the buffer information managing unit 11 buffers the input data by dividing it into logical channels according to the QoS (Quality of Service). Usually, in the functional blocks such as the buffer information managing unit 11, the operations are performed according to the QoS information attached to the transmission data; and the information about the type of the data (for example, information about whether the data is eMBB data or URLLC data) need not be explicitly recognized. However, as an example, the following explanation is given under the assumption that the QoS is eMBB-oriented data or URLLC-oriented data. Examples of the data meant for eMBB include huge files for downloading movie data. Examples of the data meant for URLLC include information used in automated driving.

If the data to be transmitted is meant for eMBB, then the buffer information managing unit 11 stores the data in the first buffer 121 of the buffer 12. On the other hand, if the data to be transmitted is meant for URLLC, then the buffer information managing unit 11 stores the data in the second buffer 122 of the buffer 12. Then, the buffer information managing unit 11 notifies the scheduler 13 about the state of the data stored in the first buffer 121 and the second buffer 122.

The scheduler 13 receives, from the buffer information managing unit 11, the notification about the state of the data stored in the first buffer 121 and the second buffer 122. Then, at the time of data transmission, the scheduler 13 identifies the data to be transmitted from among the data stored in the first buffer 121 and the second buffer 122. For example, the scheduler 13 stores, in advance, the fact that the first buffer 121 is used to store the data meant for eMBB and the second buffer 122 is used to store the data for URLLC. Then, the scheduler 13 performs scheduling while giving priority to the buffer for the URLLC data that is required to have low latency. Meanwhile, if the buffer 12 includes three or more buffers, then the scheduler 13 performs scheduling while giving priority to the buffer, from among the three or more buffers, in which the data having the highest priority is stored.

Moreover, the scheduler 13 decides on the transport block size, the MCS (Modulation and Coding Scheme) to be used, and the wireless resources.

The base station device 1 handles the data in transmission units called transport blocks. If the size of the transport blocks exceeds a predetermined size (for example, 6144 bits), then the base station device 1 encodes the data after dividing it into code blocks (CB) 301 each of which has a predetermined maximum size.

When the transmission data is meant for eMBB, the scheduler 13 decides on implementing the CBG (Code Block Group) type feedback method as the HARQ feedback method. Then, the scheduler 13 stores the fact that the CBG type feedback method is adapted. Regarding the CBG type feedback method, the explanation is given below. The CBG type feedback method represents an example of a "first feedback method".

FIG. 4 is a diagram for explaining about the CBG type feedback method. The base station device 1 treats groups of a predetermined number of code blocks 301 as CBGs (Code Brock Groups) 311 to 313. Hereinafter, in the case of not distinguishing among the CBGs 311 to 313, they are referred to as "CBGs 310". With reference to FIG. 4, the CBGs 310 are formed by grouping two code blocks 301. However, there is no restriction on the number of code blocks grouped in the CBGs 310. In the case of the data meant for eMBB, a plurality of CBGs 310 is included in a single transport block 300. Thus, it can be said that, when a plurality of CBGs 310 is included in a single transport block 300, the scheduler 13 adapts the CBG type feedback method as the HARQ feedback method.

When the CBG type feedback method is implemented, the base station device 1 receives an ACK or an NACK for each CBG 310 from the terminal device 2. Then, the base station device 1 performs retransmission regarding the CBGs 310 from which an NACK feedback is received. In the 5G technology, the bandwidth used in transmitting and receiving the data becomes wider, and there is an increase in the instances in which data is transmitted to a greater number of code blocks 301 at once. Moreover, in addition to frequency selective fading, since the scheduling of data transmission is dynamically performed for each cell, there is an increase in the instances in which the interference leans in the frequency direction as well as the time direction. That is, it is possible to think that the CBGs 310 to which data could not be correctly transmitted tend to be specific CBGs 310. For that reason, as a result of using the CBG type feedback, in the case of transmitting a large volume of data, the efficiency of data retransmission can be enhanced. The CBG type feedback method is sometimes called CB-group based HARQ-ACK.

When the transmission data is meant for URLLC, the scheduler 13 decides on implementing a multilevel type feedback method as the HARQ feedback method. Regarding the data meant for URLLC, a single CBG 310 is included in a single transport block. Thus, it can be said that, when a single CBG 310 is included in a single transport block, the scheduler 13 adapts the multilevel type feedback method as the HARQ feedback method. Herein, the number of CBGs 310 included in a single transport block 300 represents an example of a "configuration of transmission data". Moreover, the CBGs 310 represents an example of "groups having a predetermined size".

Then, the scheduler 13 stores the fact that the multilevel type feedback method is adapted. Regarding the multilevel type feedback method, the explanation is given below. The multilevel type feedback method represents an example of a "second feedback method".

When the multilevel type feedback method is adapted, the base station device 1 receives an NACK and a feedback about the signal failure level from the terminal device 2. The signal failure level represents the information indicating the volume of post-encoding data or the amount of signal power that was lacking in order to correctly receive the data. Alternatively, the signal failure level can represent the information indicating the volume of post-encoding data or the amount of signal power to be used in order to enable correct reception of data at the time of next retransmission. The base station device 1 decides on the volume of data to be retransmitted and the MCS according to the signal failure level. Then, using the decided MCS, the base station device 1 retransmits the data having the decided volume. As a result, the base station device 1 merely needs to transmit the retransmission data having the volume that enables correct reception of initially-transmitted data. As a result, it becomes possible to hold down the volume of the retransmission data. With that, the transmission cycle of the CQI (Channel Quality Indicator), which is used for notifying the transmission quality, can be lengthened; the overhead of the feedback can be held down; the MSC at the second instance of retransmission can be clearly decided at the NACK level; and data transmission of high reliability can be achieved with only a small retransmission count. That is, although the multilevel type feedback method has a small frequency of occurrence of traffic, it can contribute in enhancing the efficiency of the data transmission in URLLC in which it is required to transmit data at low latency.

Returning to the explanation with reference to FIG. 1, the scheduler 13 decides on the HARQ feedback method and then generates control information meant for enabling transmission and reception of data. Moreover, the scheduler 13 decides on the wireless resources for transmitting control information related to the MAC or the wireless resources. Then, the scheduler 13 outputs, to the downlink signal baseband processing unit 14, the information about the CBGs 310 in the transport blocks 300 of the transmission data, the information about the MCS, the generated control information, and the information about the wireless resources to be used.

Subsequently, when the CBG type feedback method is adapted, the scheduler 13 receives input of a 1-bit ACK or a 1-bit NACK for each CBG 310 from the uplink signal baseband processing unit 15. Then, the scheduler 13 identifies the CBGs 310 for which the NACK is received from among the CBGs 310 included in the transmitted transport block 300. Subsequently, the scheduler 13 decides on the data to be retransmitted. Moreover, the scheduler 13 generates control information. Furthermore, the scheduler 13 decides on the wireless resources to be used in data retransmission. Moreover, in this case, the scheduler 13 decides on using the same MCS as the MCS used at the time of initial transmission. In that case, the scheduler 13 uses the same encoding rate and the same modulation method as used at the time of initial transmission. Then, the scheduler 13 outputs, to the downlink signal baseband processing unit 14, the information about the retransmission data, the information about the MCS, the generated control information, and the information about the wireless resources to be used. The scheduler 13 performs retransmission in a repeated manner until the ACK is received for all CBGs 310.

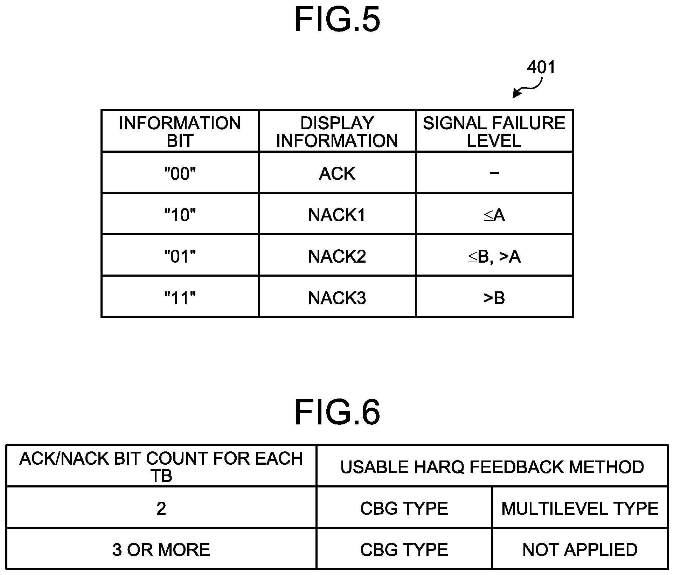

On the other hand, when the multilevel type feedback method is adapted, the scheduler 13 receives, from the uplink signal baseband processing unit 15, input of either the ACK for the transmitted data or the NACK including the information about the signal failure level. Herein, for example, the explanation is given for a case in which 2-bit information is used as the information indicating the signal failure level. The scheduler 13 includes a signal failure level determination table 401 illustrated in FIG. 5. FIG. 5 is a diagram illustrating an example of the signal failure level determination table. Then, the scheduler 13 obtains the signal failure level from the two information bits representing the obtained NACK. For example, if "10" is obtained as the value of the information bits, then the scheduler 13 refers to the signal failure level determination table 401 and confirms a signal failure level "AdB" regarding the reception of the transmission data by the terminal device 2. Herein, threshold values A and B written in FIG. 5 are predetermined threshold values. Alternatively, the configuration can be such that the base station device 1 decides on the threshold values A and B, and notifies the terminal device 2 about them using RRC signaling.

The scheduler 13 refers to the information about the signal failure level and decides on the data volume for retransmission. In that case, the scheduler 13 uses the same encoding rate as the encoding rate used at the time of initial transmission. Then, the scheduler 13 decides on the retransmission data to have the decided data volume. For example, if the signal failure level is high, then the scheduler 13 increases the data volume of the retransmission data. On the other hand, if the signal failure level is low, then the scheduler 13 lowers the data volume of the retransmission data. More particularly, the scheduler 13 varies the transmission range for the post-encoding data and decides on the retransmission data.

Moreover, the scheduler 13 decides on the wireless resources and the MCS to be used in retransmission. In that case, the scheduler 13 sometimes changes the modulation method. Moreover, the scheduler 13 generates control information. Then, the scheduler 13 outputs, to the downlink signal baseband processing unit 14, the information about the retransmission data, the information about the MCS, the generated control information, and the information about the wireless resources to be used. The scheduler 13 performs retransmission in a repeated manner until an ACK is received for the transmitted data. Herein, the scheduler 13 represents an example of a "communication control unit". Moreover, the signal of an ACK or the signal of an NACK that is sent from the terminal device 2 represents an example of "feedback information".

The following explanation is given about the case in which, in the multilevel type feedback method, a 2-bit signal is used as the NACK that includes the signal failure level. In that case, the scheduler 13 obtains a 2-bit signal in the following two cases: the case in which the multilevel type feedback method is used; and the case in which the CBG type feedback method is used and the NACK is transmitted in two CBGs.

That is, as illustrated in FIG. 6, when the ACK and the NACK for each TB has the bit count of two, either the CBG type feedback method is adapted or the multilevel type feedback method is adapted. In contrast, when the ACK and the NACK for each TB has the bit count of three or more, the CBG type feedback method is adapted. FIG. 6 is a diagram illustrating the correspondence between the fed-back bit count and the feedback method in the case in which the NACK of the multilevel type has two bits. In that case, when 2-bit information is received as the NACK, the scheduler 13 determines the adapted feedback method from among the stored feedback methods, and performs operations for retransmission.

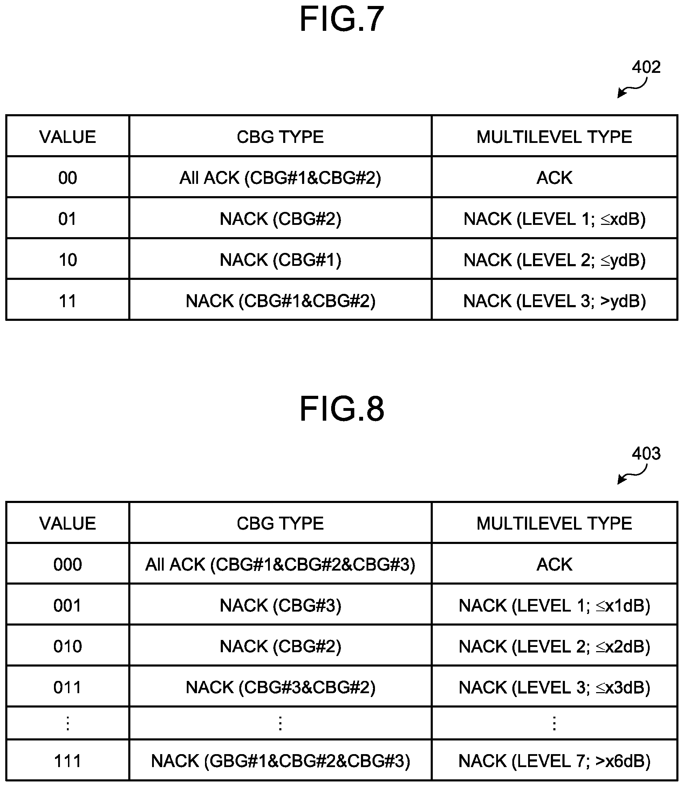

Regarding the operations performed in the case of receiving feedback of 2-bit information, the scheduler 13 includes an operation definition table 402 illustrated in FIG. 7. FIG. 7 is a diagram illustrating an example of the operation definition table referred to in the case in which a signal having the ACK/NACK bit count of two in each transport block is used.

When the feedback of 2-bit information is received, if the CBG type feedback method is adapted, the scheduler 13 refers to the operation definition table 402 and determines whether an ACK or an NACK was sent for each of CBGs #1 and #2. If the multilevel type feedback method is adapted, then the scheduler 13 obtains the signal failure level from the operation definition table 402. Herein, the signal failure level determination table 401 illustrated in FIG. 5 represents a part of the operation definition table 402.

Meanwhile, in the multilevel type feedback method, a signal having some other bit count can also be used as the NACK that includes the signal failure level. For example, the explanation is given about the case of using a 3-bit signal. In that case, when 3-bit information is received as the NACK, the scheduler 13 determines the adapted feedback method from among the stored feedback methods, and performs the operations for retransmission.

For example, the scheduler 13 includes a determination table 403 illustrated in FIG. 8. FIG. 8 is a diagram illustrating an example of the operation definition table in the case in which a 3-bit signal is used as the NACK of the multilevel type. In that case, as illustrated in FIG. 8, if the CBG type feedback method is adapted, then 3-bit information indicates the ACK or the NACK of each of CBGs #1 to #3. If the multilevel type feedback method is adapted, then the signal failure level is divided into seven stages. That is, in the multilevel type, larger the bit count indicating the NACK, the more detailed is the division of the signal failure level, thereby enabling the scheduler 13 to set the data volume for retransmission in a detailed manner.

When the feedback of 3-bit information is received, if the CBG type feedback method is adapted, the scheduler 13 refers to the operation definition table 402 and determines whether an ACK or an NACK was sent for each of the CBGs #1 to #3. If the multilevel type feedback method is adapted, then the scheduler 13 obtains the signal failure level from the operation definition table 402.

The downlink signal baseband processing unit 14 receives, from the scheduler 13, input of the information about the transmission data or the retransmission data, the information about the MCS, and the information about the control information and the wireless resources to be used. Then, the downlink signal baseband processing unit 14 obtains, from the first buffer 121 or the second buffer 122, the data corresponding to the information about the transmission data or the retransmission data.
Subsequently, the downlink signal baseband processing unit 14 applies the encoding rate specified in the received MCS information, and accordingly encodes the obtained data and the control information. Moreover, the downlink signal baseband processing unit 14 implements the modulation method specified in the received MCS information, and performs modulation of the obtained data and the control information. Then, the downlink signal baseband processing unit 14 assigns the control information and the data to the specified wireless resources, places the control information in the PDCCH, and places the data in the PDSCH. Subsequently, the downlink signal baseband processing unit 14 outputs the control information and the data to the wireless unit 16. Herein, the downlink signal baseband processing unit 14 represents an example of a "data transmitting unit".

The wireless unit 16 receives input of the control information and the data from the downlink signal baseband processing unit 14. Then, the wireless unit 16 performs DA (Digital to Analog) conversion with respect to the control information and the data. Subsequently, the wireless unit 16 transmits the control signal and the data to the terminal device 2 via an antenna using the assigned wireless resources.

Moreover, the wireless unit 16 receives, from the terminal device 2, a signal including the information about either one or both of the ACK and the NACK of the data transmitted via the antenna. In the following explanation, the "signal including the information about either one or both of the ACK and the NACK" is called the "signal indicating ACK/NACK". Then, the wireless unit 16 performs AD (Analog to Digital) conversion with respect to the received signal indicating ACK/NACK. Subsequently, the wireless unit 16 outputs the signal indicating ACK/NACK with respect to the received data to the uplink signal baseband processing unit 15.

The uplink signal baseband processing unit 15 performs demodulation and decoding with respect to the signal indicating ACK/NACK with respect to the transmitted data. Then, the uplink signal baseband processing unit 15 obtains either one or both of the information indicating the ACK and the information indicating the NACK from the received signal, and outputs that information to the scheduler 13.

Explained below with reference to FIG. 2 is the terminal device 2. The terminal device 2 includes a wireless unit 21, a PDCCH reception processing unit 22, a PDSCH reception processing unit 23, an ACK/NACK generating unit 24, and an uplink signal baseband processing unit 25.

The wireless unit 21 receives signals of PDCCH and PDSCH that include a control signal and data from the base station device 1 via an antenna. Then, the wireless unit 21 performs AD conversion with respect to the received signals. Subsequently, the wireless unit 21 outputs the signals of PDCCH and PDSCH to the PDCCH reception processing unit 22.

Moreover, the wireless unit 21 receives input of the signal indicating ACK/NACK from the uplink signal baseband processing unit 25. Then, the wireless unit 21 performs DA conversion with respect to the signal indicating ACK/NACK. Subsequently, the wireless unit 21 sends the signal indicating ACK/NACK to the terminal device 2 via an antenna.

The PDCCH reception processing unit 22 receives input of signals of PDCCH and PDSCH including a control signal and data from the wireless unit 21. Then, the PDCCH reception processing unit 22 performs demodulation and decoding with respect to the PDCCH signal and obtains a control signal. Subsequently, the PDCCH reception processing unit 22 outputs the control signal and the PDSCH signal to the PDSCH reception processing unit 23.

The PDSCH reception processing unit 23 receives input of the control signal and the PDSCH signal from the PDCCH reception processing unit 22. Then, the PDSCH reception processing unit 23 performs demodulation and decoding with respect to the PDCCH signal using the MCS specified in the control signal, and obtains data.

Subsequently, the PDSCH reception processing unit 23 determines whether or not a plurality of CBGs 310 is included in the data of a single transport block 300. More particularly, the PDSCH reception processing unit 23 calculates the transmission data size from the MCS and the wireless resources representing the resource assignment information included in the control signal. Then, according to the calculated transmission data size, the PDSCH reception processing unit 23 can decide on the number of CBGs 310 for a single transport block 300. Herein, determining the number of CBGs 310 included in the data of a single transport block 300 represents an example of the "analysis of configuration of transmission data".

If a single CBG 310 is included in a single transport block 300, then the PDSCH reception processing unit 23 adapts the multilevel type feedback method as the HARQ feedback method. Then, the PDSCH reception processing unit 23 determines whether or not the data could be correctly received. If the data could be decoded, then the PDSCH reception processing unit 23 notifies the ACK/NACK generating unit 24 about successful data decoding.

However, if data decoding ended up in failure, then the PDSCH reception processing unit 23 obtains, from the MCS, the SINR (Signal-to-Interference plus Noise power Ratio) in the case of decoding the data. Moreover, the PDSCH reception processing unit 23 calculates the SINR in the reception of data in the current instance. Then, the PDSCH reception processing unit 23 obtains the signal failure level by calculating the difference between the SINR in the case of decoding that data and the SINR in the reception of data in the current instance. Subsequently, the PDSCH reception processing unit 23 outputs a notification about unsuccessful data decoding and the signal failure level to the ACK/NACK generating unit 24.

Meanwhile, if a plurality of CBGs 310 is included in a single transport block 300, then the PDSCH reception processing unit 23 adapts the CBG type feedback method as the HARQ feedback method. Subsequently, the PDSCH reception processing unit 23 determines whether or not data decoding was successful for each CBG 310 included in the transport block 300.

Regarding the CBGs 310 for which data decoding was successful, the PDSCH reception processing unit 23 notifies the ACK/NACK generating unit 24 about successful data decoding. Moreover, regarding the CBGs 310 in which data decoding ended up in failure, the PDSCH reception processing unit 23 notifies the ACK/NACK generating unit 24 about unsuccessful data decoding.

The ACK/NACK generating unit 24 holds, for example, the signal failure level determination table 401 illustrated in FIG. 5. If the multilevel type feedback method is adapted, when a notification indicating successful data decoding is received from the PDSCH reception processing unit 23, the ACK/NACK generating unit 24 refers to the signal failure level determination table 401 and generates a 2-bit ACK indicating successful data decoding. Then, the ACK/NACK generating unit 24 outputs the 2-bit ACK to the uplink signal baseband processing unit 25. On the other hand, if a notification about unsuccessful data decoding is received along with the signal failure level from the PDSCH reception processing unit 23, then the ACK/NACK generating unit 24 refers to the signal failure level determination table 401 and generates a 2-bit NACK corresponding to the signal failure level. Subsequently, the ACK/NACK generating unit 24 outputs the 2-bit NACK to the uplink signal baseband processing unit 25.

Meanwhile, if the CBG type feedback method is adapted, then the ACK/NACK generating unit 24 receives, from the PDSCH reception processing unit 23, input of a notification about successful data decoding or a notification about unsuccessful data decoding regarding each CBG 310. Then, the ACK/NACK generating unit 24 generates the ACK for the CBGs 310 for which a notification about successful data decoding is received, and generates the NACK for the CBGs 310 for which a notification about unsuccessful data decoding is received. Subsequently, the PDSCH reception processing unit 23 summarizes the ACK and the NACK generated for each CBG 310, and outputs them as the feedback information about a single transport block 300 to the uplink signal baseband processing unit 25. Herein, the PDSCH reception processing unit 23 and the ACK/NACK generating unit 24 represent an example of a "generating unit".

When the multilevel type feedback method is adapted, the uplink signal baseband processing unit 25 receives input of the ACK or the NACK representing 2-bit information from the ACK/NACK generating unit 24. When the CBG type feedback method is adapted, the uplink signal baseband processing unit 25 receives input of the feedback information, in which the ACK and the NACK for the CBGs 310 of a signal transport block 300 are summarized, from the ACK/NACK generating unit 24.

The uplink signal baseband processing unit 25 performs encoding and modulation with respect to the data indicating either one or both of the ACK and the NACK. Then, the uplink signal baseband processing unit places the post-encoding and post-modulation data in the PUCCH (Physical Uplink Control Channel), and generates a signal indicating ACK/NACK. Herein, regardless of whether the multilevel type feedback method is adapted or the CBG type feedback method is adapted, the uplink signal baseband processing unit 25 performs encoding according to the same encoding method and generates a signal by applying the same physical transmission format.

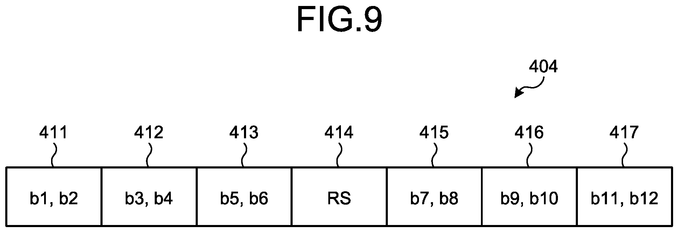

For example, regardless of whether the multilevel type feedback method is adapted or the CBG type feedback method is adapted, the uplink signal baseband processing unit 25 uses a physical transmission format 404 as illustrated in FIG. 9. FIG. 9 is a diagram illustrating an example of the physical transmission format of the PUCCH meant for transmitting ACK/NACK. More particularly, the uplink signal baseband processing unit 25 performs encoding or repetition with respect to the data representing ACK/NACK, and generates bit strings 411 to 413 and bit strings 415 to 417. Then, the uplink signal baseband processing unit 25 adds a reference signal (RS) 414 to the bit strings 411 to 413 and the bit strings 415 to 417 and arranges the bit strings so as to generate the signal of the PUCCH corresponding to the physical transmission format 404. In this way, regardless of the feedback method, by generating signals having the same physical transmission formats using the identical encoding method, the base station device 1 becomes able to receive the signal indicating ACK/NACK of different feedback methods using the same circuit. Then, the uplink signal baseband processing unit 25 outputs the signal indicating ACK/NACK to the wireless unit 21. Herein, the uplink signal baseband processing unit 25 represents an example a "feedback information transmitting unit".

In the first embodiment, in the case of the multilevel type feedback method, the PDSCH reception processing unit 23 performs operations up to the calculation of the signal failure level, and the ACK/NACK generating unit 24 generates information indicating the signal failure level. However, the configuration is not limited to this example. Alternatively, for example, the configuration can be such that the PDSCH reception processing unit 23 performs operations up to the generation of information indicating the signal failure level, and notifies the ACK/NACK generating unit 24 about the information indicating the signal failure level.

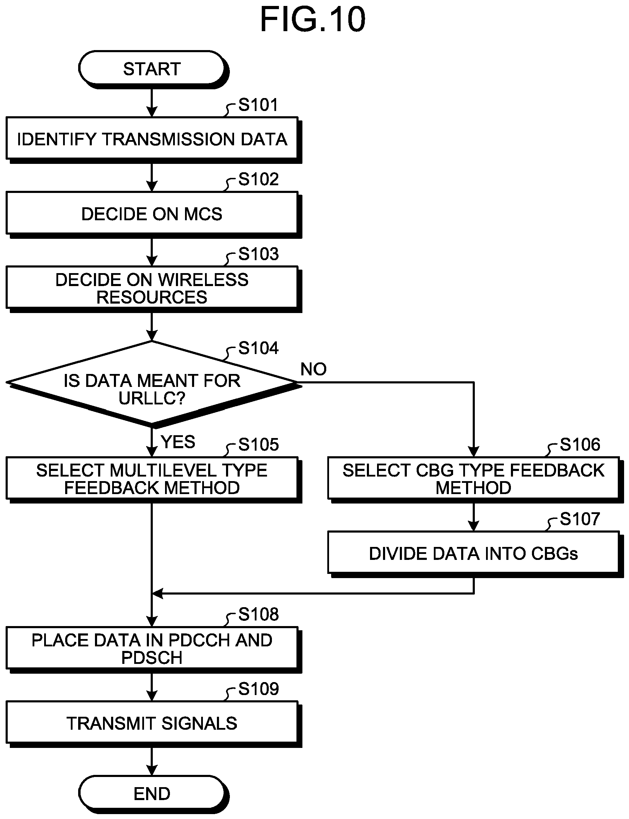

Explained below with reference to FIG. 10 is a flow of operations for initial transmission of data as performed by the base station device 1 according to the first embodiment. FIG. 10 is a flowchart for explaining the operations for initial transmission of data as performed by the base station device 1 according to the first embodiment.

The buffer information managing unit 11 obtains transmission data from a higher-level device. If the obtained data is meant for eMBB, then the buffer information managing unit 11 stores the data in the first buffer 121. Subsequently, the scheduler 13 identifies transmission data from among the data stored in the first buffer 121 and the second buffer 122 (Step S101).

Then, the scheduler 13 decides on the MCS (Step S102). Subsequently, the scheduler 13 decides on the wireless resources (Step S103). Meanwhile, the decision on the MCS and the decision on the wireless resources can be taken in a simultaneous manner.

Then, the scheduler 13 determines whether the data transmitted from the source of storage of the transmission data is the data meant for URLLC or the data meant of eMBB (Step S104).

If the transmission data is meant for URLLC (Yes at Step S104), then the scheduler 13 selects the multilevel type feedback method and stores the selected feedback method (Step S105). The system control then proceeds to Step S108.

On the other hand, if the transmission data is meant for eMBB (No at Step S104), then the scheduler 13 selects the CBG type feedback method and stores the selected feedback method (Step S106). Subsequently, the scheduler 13 divides the data of the transport block 300 to be transmitted into the CBGs 310 (Step S107).

Moreover, the scheduler 13 generates a control signal. Then, the scheduler 13 outputs the information about the transmission data, the control signal, and the information about the MCS and the wireless resources to the downlink signal baseband processing unit 14.

Subsequently, the downlink signal baseband processing unit 14 receives input of the information about the transmission data, the control signal, and the information about the MCS and the wireless resources.
Then, the downlink signal baseband processing unit 14 obtains the transmission data from the first buffer 121 or the second buffer 122. Subsequently, the downlink signal baseband processing unit 14 performs modulation and encoding with respect to the control signal and the data using the modulation method and the encoding rate specified in the obtained MCS. Moreover, the downlink signal baseband processing unit 14 assigns the post-modulation and post-encoding control signal and data to the specified wireless resources. Then, the downlink signal baseband processing unit 14 places the post-modulation and post-encoding control signal in the PDCCH. Moreover, the downlink signal baseband processing unit 14 places the post-modulation and post-encoding data in the PDSCH (Step S108). Then, the downlink signal baseband processing unit 14 outputs the post-modulation and post-encoding control signal and data to the wireless unit 16.

The wireless unit 16 receives input of the post-modulation and post-encoding control signal and data from the downlink signal baseband processing unit 14. Then, the wireless unit 16 performs DA conversion with respect to the post-modulation and post-encoding control signal and data, and transmits signals including the control signal and the data to the terminal device 2 via an antenna (Step S109).

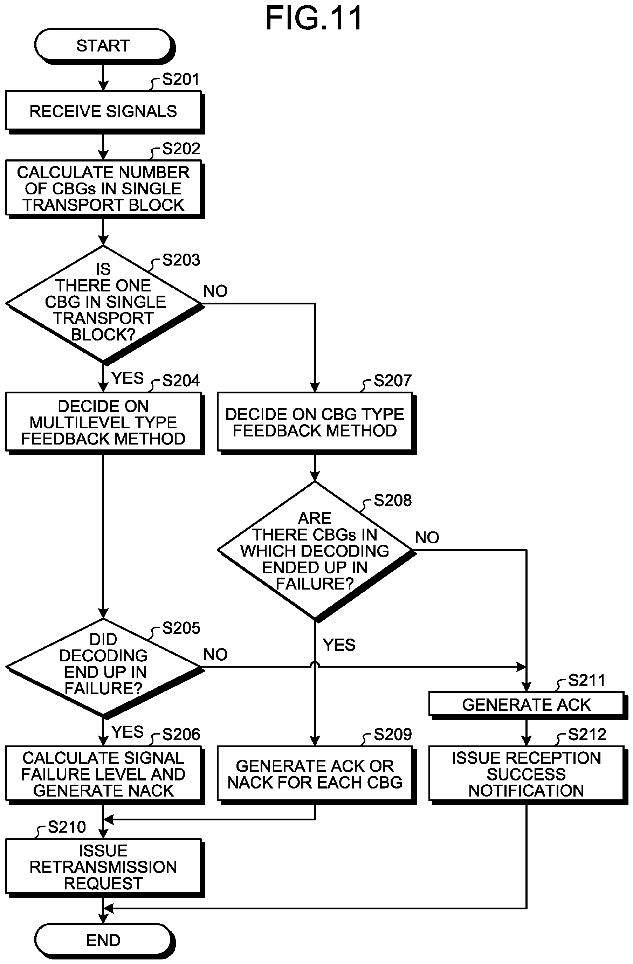

Explained below with reference to FIG. 11 is a flow of the reception operation performed by the terminal device 2 at the time of initial transmission of data according to the first embodiment. FIG. 11 is a flowchart for explaining the reception operation performed by the terminal device 2 at the time of initial transmission of data according to the first embodiment.

The wireless unit 21 receives the signals of PDCCH and PDSCH, which are transmitted by the base station device 1, via an antenna (Step S201). Then, the wireless unit 21 outputs the received signals to the PDCCH reception processing unit 22. The PDCCH reception processing unit 22 receives input of the signals of PDCCH and PDSCH from the wireless unit 21. Then, the PDCCH reception processing unit 22 performs demodulation and decoding with respect to the PDCCH signal. Subsequently, the PDCCH reception processing unit 22 outputs the post-demodulation and post-decoding signal, which includes the PDCCH, to the PDSCH reception processing unit 23.

The PDSCH reception processing unit 23 receives input of the post-demodulation and post-decoding signal, which includes the PDCCH, from the PDCCH reception processing unit 22. Then, the PDSCH reception processing unit 23 obtains control information from the PDCCH. Subsequently, the PDSCH reception processing unit 23 calculates the number of CBGs 310 for a single transport block 300 (Step S202). Then, using the demodulation method and the encoding rate as specified in the MCS included in the control information, the PDSCH reception processing unit 23 performs demodulation and decoding with respect to the PDSCH signal.

Subsequently, the PDSCH reception processing unit 23 determines whether or not there is one CBG 310 for a single transport block 300 (Step S203).

If there is one CBG 310 for a single transport block 300 (Yes at Step S203), then the PDSCH reception processing unit 23 decides on adapting the multilevel type feedback method (Step S204).

Subsequently, the PDSCH reception processing unit 23 refers to the decoding result for the transport block 300 and determines whether or not data decoding ended up in failure (Step S205). If data decoding ended up in failure (Yes at Step S205), then the PDSCH reception processing unit 23 calculates the signal failure level and outputs it to an ACK/NACK generating unit 204. The ACK/NACK generating unit 204 generates an NACK having a 2-bit value corresponding to the signal failure level input from the PDSCH reception processing unit 23 (Step S206). Then, the ACK/NACK generating unit 204 outputs the NACK to the uplink signal baseband processing unit 25. Subsequently, the system control proceeds to Step S210.

Meanwhile, if there are two or more CBGs 310 for a single transport block 300 (No at Step S203), then the PDSCH reception processing unit 23 decides on adapting the CBG type feedback method (Step S207).

Subsequently, the PDSCH reception processing unit 23 determines whether or not data decoding ended up in failure in any of the CBGs 310 (Step S208). If data decoding ended up in failure in any of the CBGs 310 (Yes at Step S208), then the PDSCH reception processing unit 23 notifies the ACK/NACK generating unit 24 about the CBGs 310 in which data decoding ended up in failure. Then, the ACK/NACK generating unit 24 generates an ACK or an NACK for each CBG 310 (Step S209). More particularly, the ACK/NACK generating unit 24 generates a 1-bit NACK for the CBGs 310 in which data decoding ended up in failure, and generates a 1-bit ACK for the remaining CBGs 310. Then, the ACK/NACK generating unit 24 summarizes the ACK and the NACK to create a response corresponding to the single transport block 300, and outputs the response to the uplink signal baseband processing unit 25. Subsequently, the system control proceeds to Step S210.

The uplink signal baseband processing unit 25 receives input of a signal including the NACK from the ACK/NACK generating unit 24. Then, the uplink signal baseband processing unit 25 performs modulation and encoding with respect to the signal including the NACK. Subsequently, the uplink signal baseband processing unit 25 outputs the post-modulation and post-encoding signal including the NACK to the wireless unit 21. The wireless unit 21 performs DA conversion with respect to the signal including the NACK as received from the uplink signal baseband processing unit 25; transmits the post-DA-conversion signal including the NACK to the base station device 1 via an antenna; and thus issues a retransmission request (Step S210).

Meanwhile, if data decoding has not ended up in failure (No at Step S205 or No at Step S208), then the PDSCH reception processing unit 23 notifies the ACK/NACK generating unit 24 about successful data decoding. Upon receiving the notification about successful data decoding, the ACK/NACK generating unit 24 generates an ACK for all CBGs 310 (Step S211).

Then, the ACK/NACK generating unit 24 outputs the signal of the generated ACK to the uplink signal baseband processing unit 25. The uplink signal baseband processing unit 25 performs modulation and encoding with respect to the signal including the ACK as input from the ACK/NACK generating unit 24. Then, the uplink signal baseband processing unit 25 outputs the post-modulation and post-encoding signal including the ACK to the wireless unit 21. The wireless unit 21 performs DA conversion with respect to the signal including the ACK as obtained from the uplink signal baseband processing unit 25; transmits the post-DA-conversion signal including the ACK to the base station device 1 via an antenna; and thus issues a reception success notification (Step S212).

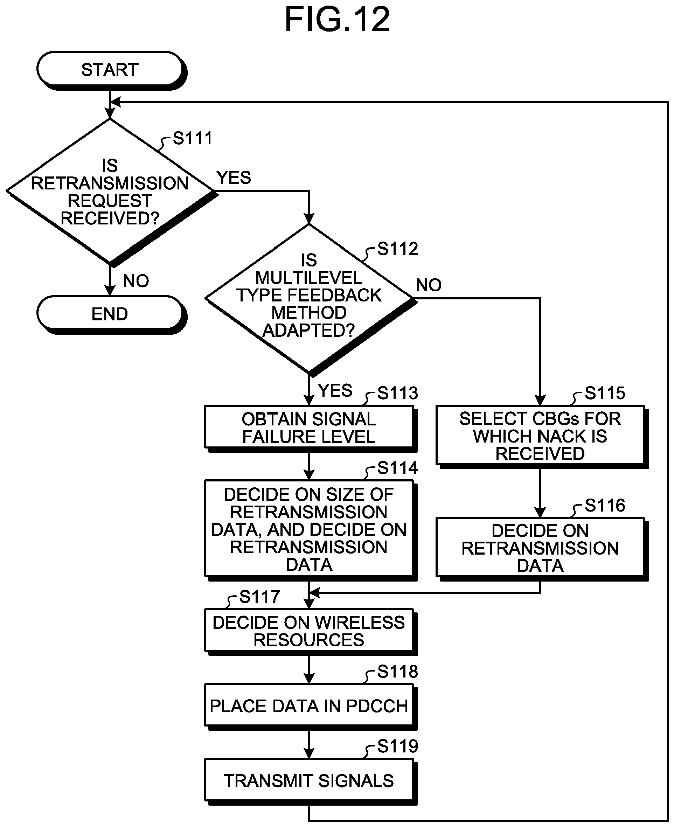

Explained below with reference to FIG. 12 is a flow of the data retransmission operation performed by the base station device 1 according to the first embodiment. FIG. 12 is a flowchart for explaining the data retransmission operation performed by the base station device 1 according to the first embodiment.

The scheduler 13 determines whether or not a retransmission request attributed to the NACK is received from the terminal device 2 (Step S111). If a retransmission request attributed to the NACK is not received (No at Step S111), that is, if all feedbacks indicate the ACK, then the scheduler 13 ends the data retransmission operation and completes the transmission operation.

On the other hand, if a retransmission request attributed to the NACK is received (Yes at Step S111), then the scheduler 13 determines whether or not the multilevel type feedback method is adapted, that is, determines whether the multilevel type feedback method is adapted or the CBG type feedback method is adapted (Step S112).

If the multilevel type feedback method is adapted (Yes at Step S112), then the scheduler 13 obtains the signal failure level from the information indicating the NACK (Step S113).

Subsequently, the scheduler 13 decides on the size of the retransmission data from the signal failure level, and decides on the retransmission data having the decided size (Step S114). Then, the system control proceeds to Step S117.

On the other hand, if the CBG type feedback method is adapted (No at Step S112), then the scheduler 13 selects, from the transport block 300 of the transmitted data, the CBGs 310 for which the NACK is received (Step S115) .

Subsequently, the scheduler 13 decides on the retransmission data to be used in retransmitting the data of the selected CBGs 310 (Step S116).

Then, the scheduler 13 decides on the wireless resources (Step S117). Moreover, the scheduler 13 generates a control signal. Subsequently, the scheduler 13 outputs the information about the retransmission data, the control signal, and the information about the MCS and the wireless resources to the downlink signal baseband processing unit 14. Herein, the MCS is same as the MCS used at the time of initial transmission.

The downlink signal baseband processing unit 14 receives input of the information about the retransmission data, the control signal, and the information about the MCS and the wireless resources from the scheduler 13. Then, the downlink signal baseband processing unit 14 obtains the specified retransmission data from the first buffer 121 and the second buffer 122. Subsequently, using the modulation method and the encoding rate specified in the obtained MCS, the downlink signal baseband processing unit 14 performs modulation and encoding with respect to the control signal and the retransmission data to be transmitted. Moreover, the downlink signal baseband processing unit 14 assigns the post-modulation and post-encoding control signal and retransmission data to the specified wireless resources. Then, the downlink signal baseband processing unit 14 places the post-modulation and post-encoding control signal in the PDCCH (Step S118). Moreover, the downlink signal baseband processing unit 14 places the post-modulation and post-encoding retransmission data to the PDSCH. Then, the downlink signal baseband processing unit 14 outputs the post-modulation and post-encoding control signal and retransmission data to the wireless unit 16.

The wireless unit 16 receives input of the post-modulation and post-encoding control signal and retransmission data from the downlink signal baseband processing unit 14. Then, the wireless unit 16 performs DA conversion with respect to the post-modulation and post-encoding control signal and data, and transmits a signal including the control signal and the retransmission data to the terminal device 2 via an antenna (Step S119). Subsequently, the system control returns to Step S111.

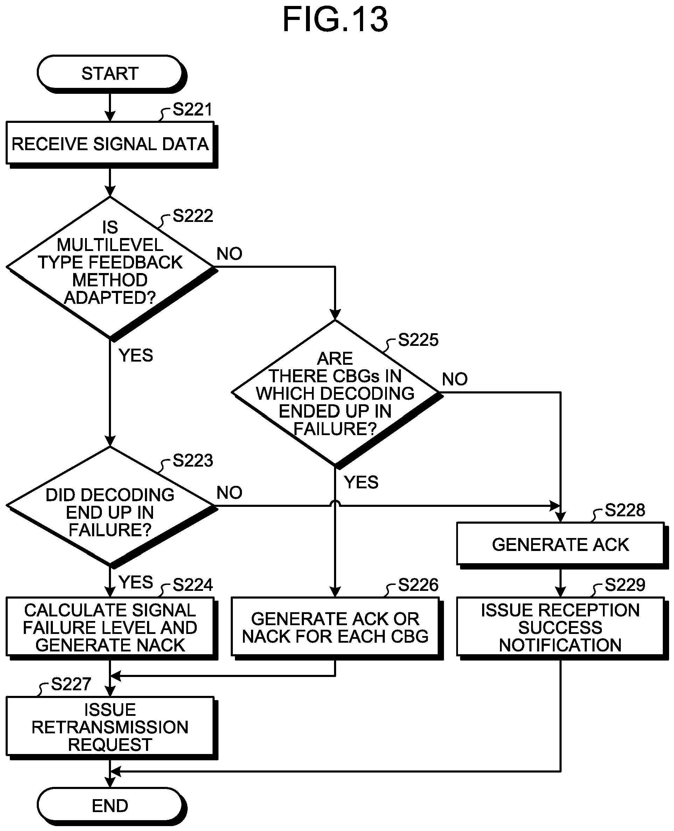

Explained below with reference to FIG. 13 is a flow of the reception operation performed by the terminal device at the time of data retransmission according to the first embodiment. FIG. 13 is a flowchart for explaining the reception operation performed by the terminal device at the time of data retransmission according to the first embodiment.

The wireless unit 21 receives, via an antenna, the signals of PDCCH and PDSCH transmitted by the base station device 1 (Step S221). Then, the wireless unit 21 outputs the received signals to the PDCCH reception processing unit 22. Thus, the PDCCH reception processing unit 22 receives input of the signals of PDCCH and PDSCH to the wireless unit 21. Then, the PDCCH reception processing unit 22 performs demodulation and decoding with respect to the PDCCH signal. Subsequently, the PDCCH reception processing unit 22 outputs a post-demodulation and post-decoding signal, which includes the PDCCH, to the PDSCH reception processing unit 23.

The PDSCH reception processing unit 23 receives input of the post-modulation and post-encoding signal including the PDCCH from the PDCCH reception processing unit 22. Then, the PDSCH reception processing unit 23 obtains the control information from the PDCCH. Subsequently, using the demodulation method and the encoding rate specified in the MCS that is included in the control information, the PDSCH reception processing unit 23 performs demodulation and decoding with respect to the signal of the PDSCH. Then, the PDSCH reception processing unit 23 determines whether or not the multilevel type feedback method is adapted, that is, determines whether the multilevel type feedback method is adapted or the CBG type feedback method is adapted for the data for which a retransmission request is issued (Step S222).

If the multilevel type feedback method is adapted (Yes at Step S222), then the PDSCH reception processing unit 23 determines whether or not data decoding ended up in failure (Step S223). If data decoding ended up in failure (Yes at Step S223), then the PDSCH reception processing unit 23 calculates the signal failure level and outputs it to the ACK/NACK generating unit 24. The ACK/NACK generating unit 24 generates an NACK, which has a 2-bit value, corresponding to the signal failure level input from the PDSCH reception processing unit 23 (Step S224). Then, the ACK/NACK generating unit 24 outputs the NACK to the uplink signal baseband processing unit 25. Subsequently, the system control proceeds to Step S227.

On the other hand, if the CBG type feedback method is adapted (No at Step S222), then the PDSCH reception processing unit 23 determines whether or not there are any CBGs 310 in which data decoding ended up in failure (Step S225). If there are CBGs 310 in which data decoding ended up in failure (Yes at Step S225), then the PDSCH reception processing unit 23 notifies the ACK/NACK generating unit 24 about the CBGs 310 in which data decoding ended up in failure. The ACK/NACK generating unit 24 generates an ACK or an NACK for each CBG 310 (Step S226). Then, the system control proceeds to Step S227.

The uplink signal baseband processing unit 25 receives input of a signal including the NACK from the ACK/NACK generating unit 24. Then, the uplink signal baseband processing unit 25 performs modulation and encoding with respect to the signal including the NACK. Subsequently, the uplink signal baseband processing unit 25 outputs the post-modulation and post-encoding signal including the NACK to the wireless unit 21. The wireless unit 21 performs DA conversion with respect to the signal including the NACK as received from the uplink signal baseband processing unit 25; transmits the post-DA-conversion signal including the NACK to the base station device 1 via an antenna; and thus issues a retransmission request (Step S227).

On the other hand, if data decoding has not ended up in failure (No at Step S223 or No at Step S225), then the PDSCH reception processing unit 23 notifies the ACK/NACK generating unit 24 about successful data decoding. Upon receiving the notification about successful data decoding, the ACK/NACK generating unit 24 generates an ACK for all CBGs 310 (Step S228).

Then, the ACK/NACK generating unit 24 outputs a signal including the ACK to the uplink signal baseband processing unit 25. The uplink signal baseband processing unit 25 performs modulation and encoding with respect to the signal including the ACK as input from the ACK/NACK generating unit 24. Subsequently, the uplink signal baseband processing unit 25 outputs the post-modulation and post-encoding signal including the ACK to the wireless unit 21. The wireless unit 21 performs DA conversion with respect to the signal including the ACK as obtained from the uplink signal baseband processing unit 25; transmits the post-DA-conversion signal including the ACK to the base station device 1 via an antenna; and thus issues a reception success notification (Step S229).

As described above, in the wireless communication system according to the first embodiment, either the multilevel type feedback method or the CBG type feedback method is selected as the HARQ feedback method according to the number of CBGs included in a transport block.

It is often the case that the data meant for eMBB is large in volume and that a transport block is configured with a plurality of CBGs. For example, in the 5th generation communication method, in eMBB, the size per transport block ranges from few tens of bits to few tens of thousands of bits, and the number of code blocks is also large. In contrast, it is often the case that the data meant for URLLC is small in volume and that a transport block is configured with a single CBG. For example, in URLLC, the packet size ranging from 10 bytes to few hundreds of bytes is considered, and a single code block essentially includes a single transport block. Moreover, there are cases when aperiodic packets are generated, and the CQI feedback period is sometimes set to a few milliseconds.

Based on such factors, in the wireless communication system according to the first embodiment, in the case of using the data meant for URLLC, the multilevel type feedback method is adapted; and, in the case of using the data meant for eMBB, the CBG type feedback method is adapted. Moreover, in the case of using the data meant for eMBB, retransmission is performed in units of CBG, so that the efficiency of data retransmission is enhanced. Furthermore, in the case of using the data meant for URLLC, the feedback overhead can be held down by holding down the CQI cycle, and data transmission of a high degree of reliability can be achieved with only a small retransmission count. In this way, as a result of using different HARQ feedback methods according to the use case of the data to be transmitted, the efficiency of processing the HARQ feedback can be enhanced, thereby enabling achieving more efficient data transmission.

Moreover, in the wireless communication system according to the first embodiment, even when a different HARQ feedback method is adapted, the base station device can still receive the signal indicating ACK/NACK using the same circuit. That enables avoiding complexity in the configuration of the base station device and holding down the scale thereof.

### (Modification example)

Given below is the explanation of a modification example of the first embodiment. In the first embodiment, the HARQ feedback method is decided according to the number of CBGs 310 included in the data received by the terminal device 2. However, it is also possible to implement some other method for deciding on the HARQ feedback method. The following explanation is given about a case in which another decision method is adapted as the method for deciding on the HARQ feedback method.

For example, the scheduler 13 of the base station device adds, in the control information, information that explicitly specifies the feedback method. More particularly, the scheduler 13 sets a flag specifying the HARQ feedback method in a predetermined area of PDCCH.

The PDCCH reception processing unit 22 of the terminal device 2 checks the flag set in the predetermined area of PDCCH and obtains the information about the adapted HARQ feedback method. Then, the PDCCH reception processing unit 22 notifies the PDSCH reception processing unit 23 about the adapted HARQ feedback method. The PDSCH reception processing unit 23 and the ACK/NACK generating unit 24 perform operations according to the notified HARQ feedback method.

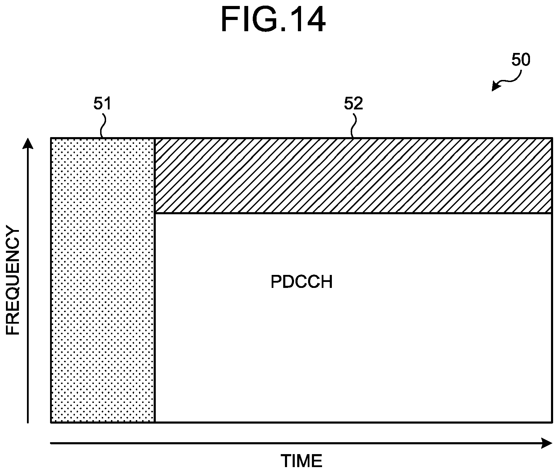

Meanwhile, other than explicitly specifying the HARQ feedback method, it can also be notified according to the differences in the usage area of PDCCH. FIG. 14 is a diagram illustrating the PDCCH in the case in which different wireless resources are set for use for each HARQ feedback method. For example, when the CBG type feedback method is adapted, the scheduler 13 transmits PDCCH signals using a wireless resource 51 from among wireless resources 50 of the PDCCH. Moreover, when the multilevel type feedback method is adapted, the scheduler 13 transmits PDCCH signals using a wireless resource 52 from among the wireless resources 50 of the PDCCH.

The PDCCH reception processing unit 22 of the terminal device 2 checks the usage area of the wireless resource of the PDCCH signals and, if the wireless resource 51 is used, determines that the CBG type feedback method is adapted. On the other hand, if the wireless resource 52 is used, the PDCCH reception processing unit 22 determines that the multilevel type feedback method is adapted. Then, the PDCCH reception processing unit 22 notifies the PDSCH reception processing unit 23 about the adapted HARQ feedback method. The PDSCH reception processing unit 23 and the ACK/NACK generating unit 24 perform operations according to the adapted HARQ feedback method.

In this way, the base station device 1 becomes able to notify the terminal device 2 about the HARQ feedback method using some other information. However, the method explained herein is not the only possible method. That is, as long as the information enables the terminal device 2 to determine the adapted HARQ feedback method, the base station device 1 can notify about the HARQ feedback method using that information.

As described above, in the wireless communication system according to the first embodiment, by notifying the terminal device about the HARQ feedback method, the base station device can change the HARQ feedback method to be implemented in the terminal device. In this way, even when the HARQ feedback method is changed according to a notification from the base station device, in an identical manner to the first embodiment, the efficiency of processing the HARQ feedback can be enhanced, thereby enabling achieving more efficient data transmission.

In the first embodiment, although the explanation is given about the case in which the 5th generation communication method is used, the explanation is applicable also to the conventional LTE communication. In the conventional LTE communication, 1-bit information indicating the ACK or the NACK is added to the data of a single transport block 300. In that regard, if there is only one CBG 310, the scheduler 13 sets whether to implement the feedback method of the conventional LET communication based on RRC (Radio Resource Control) signaling or to implement the multilevel type feedback method.

### [Second embodiment]

Given below is the explanation of a second embodiment. The wireless communication system according to the second embodiment differs from the first embodiment in the way that the HARQ feedback method is decided according to the number of CBGs per transport block as well as according to the PDCCH type. The base station device and the terminal device according to the second embodiment are as illustrated in FIGS. 1 and 2, respectively. In the following explanation, the functions of the constituent elements identical to the first embodiment are not explained again.

Even when the data is meant for eMBB, it is possible to think of a case in which there is only one CBG 310 in a single transport block 300 depending on the situation. In that regard, the PDSCH reception processing unit 23 of the terminal device 2 performs the following operations and decides on the HARQ feedback method.

The PDSCH reception processing unit 23 receives input of the control signal and the PDSCH signal from the PDCCH reception processing unit 22. Then, using the control signal, the PDSCH reception processing unit 23 determines whether or not a plurality of CBGs 310 is included in a single transport block 300. If a plurality of CBGs 310 is included in a single transport block 300, then the PDSCH reception processing unit 23 decides on adapting the CBG type feedback method.

On the other hand, if there is only one CBG 310 in a single transport block 300, then the PDSCH reception processing unit 23 obtains the size of the control information. Subsequently, the PDSCH reception processing unit 23 determines whether or not the size of the control information is smaller than a threshold value. Herein, the determination of whether or not the size of the control information is smaller than a threshold value represents "analysis of control information".

Regardless of whether the data transmission is meant for eMBB or meant for URLLC, it is often assumed that the size of the PDCCH signals after the encoding of the control information is same. In the case of the data meant for URLLC, the encoding rate having high redundancy is used in order to enhance the reliability of data transmission. Hence, in the case of the data meant for URLLC, the control information becomes same in size or smaller in size than the control information of the smallest type in the case of the data meant for eMBB. For example, the control information for the data meant for eMBB is 20 bits to 40 bits in size, while the control information for the data meant for URLLC is 10 bits to 20 bits in size. In that regard, for example, the PDSCH reception processing unit 23 stores the size of 20 bits as the threshold value.

If the size of the control information is smaller than the predetermined value, then the PDSCH reception processing unit 23 decides on adapting the multilevel type feedback method. On the other hand, if the size of the control information is equal to or greater than the predetermined value, then the PDSCH reception processing unit 23 decides on adapting the CBG type feedback method.

Subsequently, the PDSCH reception processing unit 23 performs operations according to the adapted HARQ feedback method.

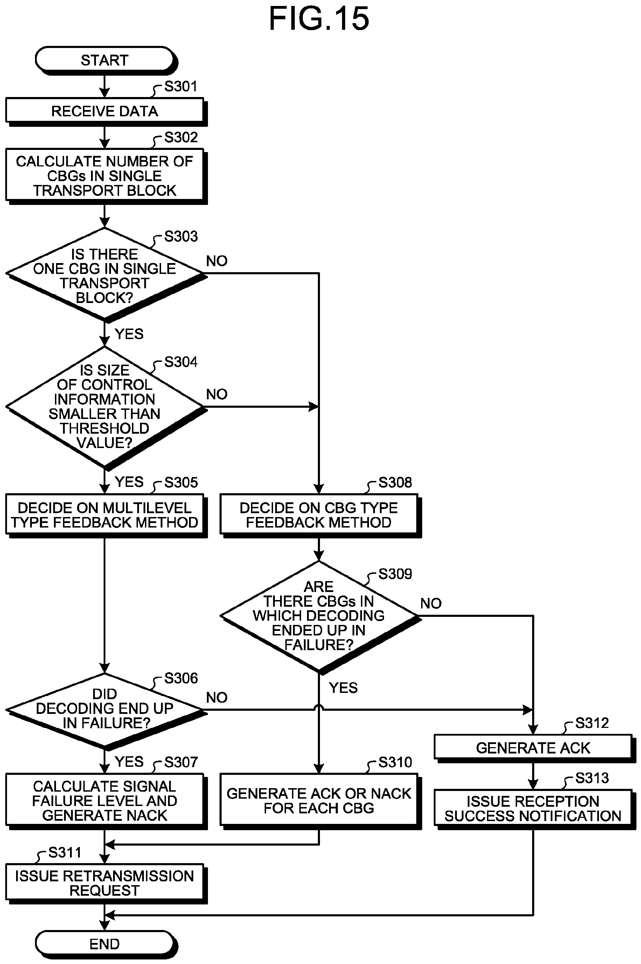

Explained below with reference to FIG. 15 is a flow of the reception operation performed by the terminal device 2 at the time of initial transmission of data according to the second embodiment. FIG. 15 is a flowchart for explaining the reception operation performed by the terminal device 2 at the time of initial transmission of data according to the second embodiment.

The wireless unit 21 receives the signals of PDCCH and PDSCH, which are transmitted by the base station device 1, via an antenna (Step S301). Then, the wireless unit 21 outputs the received signals to the PDCCH reception processing unit 22. The PDCCH reception processing unit 22 receives input of the signals of PDCCH and PDSCH from the wireless unit 21. Then, the PDCCH reception processing unit 22 performs demodulation and decoding with respect to the PDCCH signal. Subsequently, the PDCCH reception processing unit 22 outputs the post-demodulation and post-decoding signal, which includes the PDCCH, to the PDSCH reception processing unit 23.

The PDSCH reception processing unit 23 receives input of the post-demodulation and post-decoding signal, which includes the PDCCH, from the PDCCH reception processing unit 22. Then, the PDSCH reception processing unit 23 obtains control information from the PDCCH. Subsequently, using the demodulation method and the encoding rate specified in the MCS that is included in the control information, the PDSCH reception processing unit 23 performs demodulation and decoding with respect to the PDSCH signal. Then, the PDSCH reception processing unit 23 calculates the number of CBGs 310 for a single transport block 300 (Step S302).

Subsequently, the PDSCH reception processing unit 23 determines whether or not there is one CBG 310 for a single transport block 300 (Step S303).

If there is one CBG 310 for a single transport block 300 (Yes at Step S303), then the PDSCH reception processing unit 23 determines whether or not the size of the control signal is smaller than a threshold value (Step S304) .

If the size of the control signal is smaller than the threshold value (Yes at Step S304), then the PDSCH reception processing unit 23 decides on adapting the multilevel type feedback method (Step S305).

Subsequently, the PDSCH reception processing unit 23 refers to the decoding result of the transport block 300 and determines whether or not data decoding ended up in failure (Step S306). If data decoding ended up in failure (Yes at Step S306), then the PDSCH reception processing unit 23 calculates the signal failure level and outputs it to the ACK/NACK generating unit 24. The ACK/NACK generating unit 24 generates an NACK, which has a 2-bit value, corresponding to the signal failure level input from the PDSCH reception processing unit 23 (Step S307). Then, the ACK/NACK generating unit 24 outputs the NACK to the uplink signal baseband processing unit 25. Subsequently, the system control proceeds to Step S311.

Meanwhile, if there are two or more CBGs 310 for a single transport block 300 (No at Step S303) and if the size of the control signal is equal to or greater than the threshold value (No at Step S304), then the system control proceeds to Step S308. That is, the PDSCH reception processing unit 23 decides on adapting the CBG type feedback method (Step S308).

Then, the PDSCH reception processing unit 23 determines whether or not there are any CBGs 310 in which data decoding ended up in failure (Step S309). If there are CBGs 310 in which data decoding ended up in failure (Yes at Step S309), then the PDSCH reception processing unit 23 notifies the ACK/NACK generating unit 24 about the CBGs 310 in which data decoding ended up in failure. The ACK/NACK generating unit 24 generates an ACK or an NACK for each CBG 310 (Step S310). More particularly, the ACK/NACK generating unit 24 generates a 1-bit NACK for the CBGs 310 in which data decoding ended up in failure, and generates a 1-bit ACK for the remaining CBGs 310. Then, the ACK/NACK generating unit 24 summarizes the ACK and the NACK to create a response corresponding to the single transport block 300, and outputs the response to the uplink signal baseband processing unit 25. Subsequently, the system control proceeds to Step S311.

The uplink signal baseband processing unit 25 receives input of a signal including the NACK from the ACK/NACK generating unit 24. Then, the uplink signal baseband processing unit 25 performs modulation and encoding with respect to the signal including the NACK. Subsequently, the uplink signal baseband processing unit 25 outputs the post-modulation and post-encoding signal including the NACK to the wireless unit 21. The wireless unit 21 performs DA conversion with respect to the signal including the NACK as received from the uplink signal baseband processing unit 25; transmits the post-DA-conversion signal including the NACK to the base station device 1 via an antenna; and thus issues a retransmission request (Step S311).

Meanwhile, if data decoding has not ended up in failure (No at Step S306 or No at Step S309), then the PDSCH reception processing unit 23 notifies the ACK/NACK generating unit 24 about successful data decoding. Upon receiving the notification about successful data decoding, the ACK/NACK generating unit 24 generates an ACK for all CBGs 310 (Step S312).

Then, the ACK/NACK generating unit 24 outputs the signal including the generated ACK to the uplink signal baseband processing unit 25. The uplink signal baseband processing unit 25 performs modulation and encoding with respect to the signal including the ACK as input from the ACK/NACK generating unit 24. Then, the uplink signal baseband processing unit 25 outputs the post-modulation and post-encoding signal including the ACK to the wireless unit 21. The wireless unit 21 performs DA conversion with respect to the signal including the ACK as obtained from the uplink signal baseband processing unit 25; transmits the post-DA-conversion signal including the ACK to the base station device 1 via an antenna; and thus issues a reception success notification (Step S313).

Meanwhile, in the second embodiment too, in an identical manner to the modification example of the first embodiment, the configuration can be such that the base station device 1 notifies the terminal device 2 about the HARQ feedback method using some other information, and the terminal device 2 performs operations according to the notified HARQ feedback method. Moreover, by performing RRC signaling with respect to the terminal device 2, whether to implement the ACK/NACK method of a plurality of bits per transport block or whether to implement the ACK/NACK method of one bit per transport block in an identical manner to the LTE can be specified for each type of the PDCCH.

As described above, the terminal device according to the second embodiment decides on the HARQ feedback method according to the number of CBGs per transport block as well as according to the PDCCH type. As a result, the selection of the multilevel type feedback method in the case of the data meant for URLLC and the selection of the CBG type feedback method in the case of eMBB can be performed with a higher degree of certainty. Hence, the efficiency of processing the HARQ feedback can be enhanced, thereby enabling achieving more efficient data transmission.

In the second embodiment, although the HARQ feedback method is selected using the size of the control information, as long as the information enables distinguishing between the data meant for eMBB and the data meant for URLLC, some other information can also be used in selecting the HARQ feedback method. Herein, the information such as the size of the control information that enables classification of the control information for the purpose of distinguishing between the data meant for eMBB and the data meant for URLLC represents an example of "type of control information".

### [Third embodiment]

Given below is the explanation of a third embodiment. In the wireless communication system according to the third embodiment, the signal indicating ACK/NACK of the multilevel type feedback method is output with priority over the signal indicating ACK/NACK of the CBG type feedback method. The base station device and the terminal device according to the third embodiment are as illustrated in FIGS. 1 and 2, respectively. In the following explanation, the functions of the constituent elements identical to the first embodiment are not explained again.

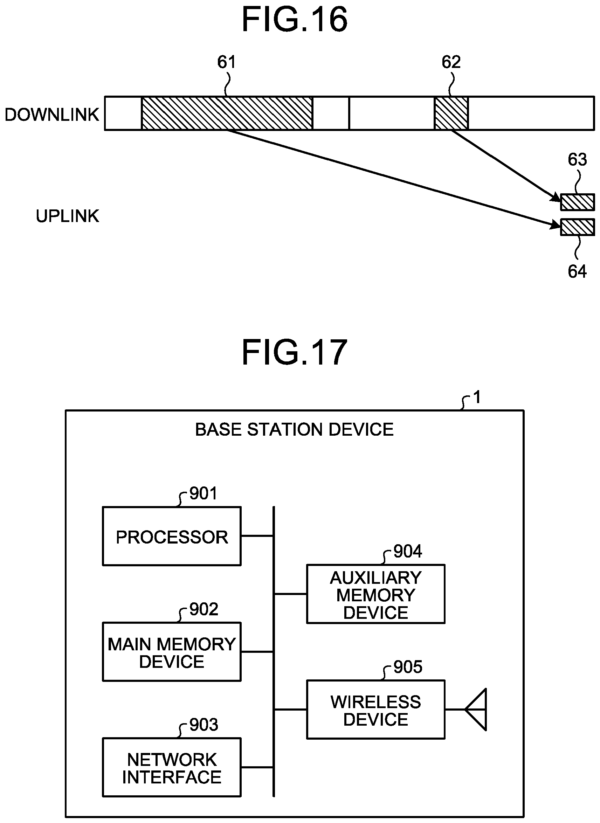

For example, in the terminal device 2, it is possible to think of a case in which the transmission timing of the signal indicating ACK/NACK of the multilevel type feedback method overlaps with the transmission timing of the signal indicating ACK/NACK of the CBG type feedback method. In that case, the uplink signal baseband processing unit 25 of the terminal device 2 according to the third embodiment transmits with priority the signal indicating ACK/NACK of the multilevel type feedback method in the manner described below. FIG. 16 is a diagram illustrating the state in which the transmission timing of the signal indicating ACK/NACK of the multilevel type feedback method overlaps with the transmission timing of the signal indicating ACK/NACK of the CBG type feedback method.

The following explanation is given about the case in which data 61 and 62 are transmitted from the base station device 1 to the terminal device 2. That is, in the downlink, the data 61 and 62 are transmitted as illustrated in FIG. 16. The data 61 represents the data meant for eMBB, and the data 62 represents the data meant for URLLC.

The uplink signal baseband processing unit 25 receives input of data 64, which represents the ACK/NACK with respect to the data 61, and input of data 63, which represents the ACK/NACK with respect to the data 62, at the same time from the ACK/NACK generating unit 24. In that case, the uplink signal baseband processing unit 25 also receives, from the ACK/NACK generating unit 24, information indicating whether the data 63 representing the ACK/NACK as well as the data 64 representing the ACK/NACK is a signal of the multilevel type feedback method or a signal of the CBG type feedback method.

The uplink signal baseband processing unit 25 obtains, from the control information, the power density in the frequency direction for transmitting the data 63 and 64. Then, the uplink signal baseband processing unit 25 determines whether or not the electrical power for transmitting the data 64 remains available when the data 63 is transmitted.

If there is no available electrical power for transmitting the data 64, then the uplink signal baseband processing unit 25 selects the data 63 that is a signal of the multilevel type feedback method. Subsequently, the uplink signal baseband processing unit 25 performs modulation and encoding with respect to the data 63; assigns wireless resources; and outputs the data 63 to the wireless unit 21.

If the electrical power for transmitting the data 64 is available, then the uplink signal baseband processing unit 25 performs modulation and encoding with respect to the data 63 as well as the data 64; assigns wireless resources; and outputs the data 63 and 64 to the wireless unit 21.

When there is no available electrical power for transmitting the data 64, the wireless unit 21 receives input of the post-modulation and post-encoding data 63 from the uplink signal baseband processing unit 25. Then the wireless unit 21 transmits a signal including the post-modulation and post-encoding data 63 to the base station device 1 via an antenna.

On the other hand, when the electrical power for transmitting the data 64 is available, the wireless unit 21 receives input of the post-modulation and post-encoding data 63 and 64 from the uplink signal baseband processing unit 25. Then, the wireless unit 21 simultaneously transmits a signal including the post-modulation and post-encoding data 63 and a signal including the post-modulation and post-encoding data 64 to the base station device 1 via an antenna.

As described above, the terminal device according to the third embodiment transmits with priority the signal indicating ACK/NACK of the multilevel type feedback method. As a result, the data meant of URLLC in which low latency and high reliability is required can be transmitted in a prompt manner, thereby enabling achieving stable transmission and reception of signals related to URLLC.

### (Hardware configuration)

Explained below with reference to FIG. 17 is a hardware configuration of the base station device 1. FIG. 17 is a hardware configuration diagram of the base station device according to the embodiments. The base station device 1 includes a processor 901, a main memory device 902, a network interface 903, an auxiliary memory device 904, and a wireless device 905.

The processor 901 is connected to the main memory device 902, the network interface 903, the auxiliary memory device 904, and the wireless device 905 by a bus. The wireless device 905 is further connected to an antenna.

The network interface 903 is an interface used in communication with higher-level devices. The main memory device 902 enables implementation of the functions of the buffer 12 illustrated in FIG. 1.

The auxiliary memory device 904 is used to store various programs including the programs meant for implementing the functions of the buffer information managing unit 11, the scheduler 13, the downlink signal baseband processing unit 14, and the uplink signal baseband processing unit 15 illustrated in FIG. 1.

The processor 901 reads the various programs stored in the auxiliary memory device 904, loads them in the main memory device 902, and executes them. As a result, the processor 901 implements the functions of the buffer information managing unit 11, the scheduler 13, the downlink signal baseband processing unit 14, and the uplink signal baseband processing unit 15 illustrated in FIG. 1.

The wireless device 905 implements the functions of the wireless unit 16. Moreover, the wireless device 905 performs wireless communication with the terminal device 2 via an antenna.

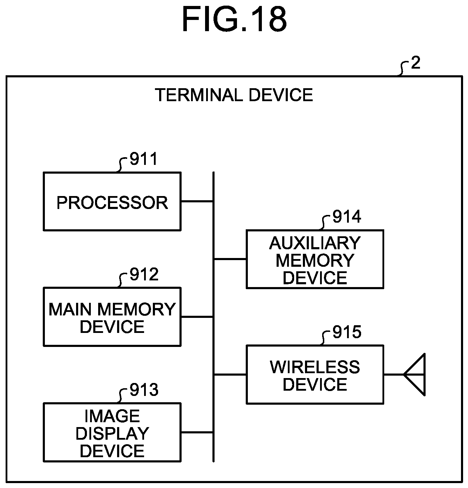

Explained below with reference to FIG. 18 is a hardware configuration of the terminal device 2. FIG. 18 is a hardware configuration diagram of the terminal device according to the embodiments. The terminal device 2 includes a processor 911, a main memory device 912, an image display device 913, an auxiliary memory device 914, and a wireless device 915.

The processor 911 is connected to the main memory device 912, the image display device 913, the auxiliary memory device 914, and the wireless device 915 by a bus. The wireless device 915 is further connected to an antenna.

Examples of the image display device 913 include a liquid crystal display. The image display device 913 displays the data that is transmitted from the base station device 1 and thus provides the data to the operator.

The auxiliary memory device 914 is used to store various programs including the programs meant for implementing the functions of the PDCCH reception processing unit 22, the PDCCH reception processing unit 23, the ACK/NACK generating unit 24, and the uplink signal baseband processing unit 25 illustrated in FIG. 2.

The processor 911 reads the various programs stored in the auxiliary memory device 914, loads them in the main memory device 912, and executes them. As a result, the processor 911 implements the functions of the PDCCH reception processing unit 22, the PDCCH reception processing unit 23, the ACK/NACK generating unit 24, and the uplink signal baseband processing unit 25 illustrated in FIG. 2.

The wireless device 915 implements the functions of the wireless unit 21. Moreover, the wireless device 915 performs wireless communication with the base station device 1 via an antenna.

### Reference Signs List

- 1: base station device
- 2: terminal device
- 11: buffer information managing unit
- 12: buffer
- 13: scheduler
- 14: downlink signal baseband processing unit
- 15: uplink signal baseband processing unit
- 16: wireless unit
- 21: wireless unit
- 22: PDCCH reception processing unit
- 23: PDSCH reception processing unit
- 24: ACK/NACK generating unit
- 25: uplink signal baseband processing unit
- 121: first buffer
- 122: second buffer

## Claims

1. A wireless communication system comprising a base station device and a terminal device, wherein
the base station device includes
a communication control unit that
decides on transmission data which is to be transmitted to the terminal device,
selects, as a feedback method, either a first feedback method or a second feedback method based on configuration of the transmission data,
receives, from the terminal device, feedback information with respect to the transmission data that is transmitted, and
decides on retransmission data according to the feedback method selected based on the feedback information, and
a data transmitting unit that transmits the transmission data and the retransmission data decided by the communication control unit, and
the terminal device includes
a generating unit that
determines whether or not decoding of the transmission data, which is transmitted from the base station device, is successful, and
generates the feedback information according to the feedback method decided by the communication control unit, and
a feedback information transmitting unit that transmits the feedback information, which is generated by the generating unit, to the base station device.

2. The wireless communication system according to claim 1, wherein the communication control unit selects the feedback method based on whether or not the transmission data is dividable into a plurality of groups having a predetermined size.

3. The wireless communication system according to claim 1, wherein the generating unit analyzes configuration of the received transmission data and identifies the feedback method decided by the communication control unit.

4. The wireless communication system according to claim 1, wherein the communication unit selects the feedback method based on configuration of the transmission data as well as based on type of control information that is attached to the transmission data.

5. The wireless communication system according to claim 4, wherein the communication control unit uses size of the control information as the type of the control information.

6. The wireless communication system according to claim 4, wherein the generating unit analyzes configuration of the received transmission data and analyzes the control information, and identifies the feedback method decided by the communication control unit.

7. The wireless communication system according to claim 1, wherein the feedback information transmitting unit
holds, in advance, priority of first-type feedback information generated according to the first feedback method and priority of second-type feedback information generated according to the first feedback method, and
when the first-type feedback information and the second-type feedback information are received at same time, transmits the first-type feedback information and the second-type feedback information according to respective priorities.

8. A base station device comprising:
a communication control unit that
decides on transmission data to be transmitted to a terminal device,
selects, as a feedback method, either a first feedback method or a second feedback method based on configuration of the transmission data,
receives, from the terminal device, feedback information with respect to the transmission data that is transmitted, and
decides on retransmission data according to the feedback method selected based on the feedback information; and
a data transmitting unit that transmits the transmission data and the retransmission data decided by the communication control unit.

9. A terminal device comprising:
a generating unit that
determines whether or not decoding of transmission data, which is transmitted from a base station device, is successful,
when decoding of the transmission data is not successful, identifies a feedback method to be adapted from among a first feedback method and a second feedback method based on the transmission data, and
generates feedback information according to the identified feedback method; and
a feedback information transmitting unit that transmits the feedback information, which is generated by the generating unit, to the base station device.

10. A wireless communication method implemented in a base station device and a terminal device, comprising:
transmitting, by the base station device, that includes
deciding on transmission data which is to be transmitted to the terminal device,
selecting, as a feedback method, either a first feedback method or a second feedback method based on configuration of the transmission data, and
transmitting the decided transmission data to the terminal device;
transmitting, by the terminal device, that includes
determining whether or not decoding of the transmission data, which is transmitted from the base station device, is successful,
generating, when decoding of the transmission data is not successful, feedback information according to the feedback method decided by the base station device, and
transmitting the feedback information to the base station device; and
transmitting, by the base station device, that includes
receiving the feedback information with respect to the transmission data from the terminal device,
deciding on retransmission data according to the feedback method selected based on the feedback information, and
transmitting the retransmission data to the terminal device.
